(19)

Europäisches
Patentamt
European
Patent Office
Office européen
des brevets

(11) **EP 3 614 313 A1**

(12) **EUROPEAN PATENT APPLICATION**

(43) Date of publication:
**26.02.2020 Bulletin 2020/09**

(21) Application number: **18189763.8**

(22) Date of filing: **20.08.2018**

(51) Int Cl.:
*G06N 3/04* (2006.01)    *G06N 3/08* (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Koninklijke Philips N.V.
5656 AE Eindhoven (NL)**

(72) Inventors:
• **BAKKER, Bart Jacob
5656 AE Eindhoven (NL)**

• **HARMA, Aki Sakari
5656 AE Eindhoven (NL)**
• **KOOIJMAN, Gerben
5656 AE Eindhoven (NL)**
• **MAVRIEUDUS, Dimitros
5656 AE Eindhoven (NL)**

(74) Representative: **de Haan, Poul Erik et al
Philips International B.V.
Philips Intellectual Property & Standards
High Tech Campus 5
5656 AE Eindhoven (NL)**

(54) **ESTIMATING CONFIDENCE OF MACHINE-LEARNING OUTPUT**

(57)    A method and system for estimating a confidence of a machine-learning model output. The machine-learning model is applied to a first portion of input data to generate a first output (corresponding to a desired prediction task) and a second output (corresponding to second portion of the input data). The second output and the second portion of the input data are compared to determine a confidence value of the first output of the machine-learning model.

FIG. 1

**EP 3 614 313 A1**

**Description**

FIELD OF THE INVENTION

The present invention relates to the field of machine-learning, and in particular to the field of estimating an accuracy of an output of a machine-learning model.

BACKGROUND OF THE INVENTION

Machine-learning models, such as deep learning models, are increasingly used in data analysis tasks, such as image analysis and speech recognition. Generally, machine-learning models are applied to input data to generate desired output information or data.

Typically, a machine-learning model is tuned to perform a specific task, i.e. trained to generate a specific output, using training data. This process involves collecting training data and applying a numerical model to the training data to provide a desired output. Parameters of this numerical model are then modified based a comparison between the provided desired output and a known value for this desired output (i.e. obtained from the training data), in order to improve a performance of the numerical model.

However, one problem of machine-learning models is that, once trained, an assumption is made that new input data will resemble historical input data (that was used to train the model). There is no fixed method to state when an answer is not reliable, e.g. in cases where the new input data does not resemble the historical input data on which the model was initially created. In many situations, especially in medical applications, it is highly undesirable for a machine-learning model to unknowingly provide a wrong answer or output.

Thus, there is a desire to estimate a confidence value of an output of a machine-learning model, in order to establish an accuracy of the machine-learning model with respect to new input data.

SUMMARY OF THE INVENTION

The invention is defined by the claims.

According to examples in accordance with an aspect of the invention, there is provided a method of estimating a confidence level of an accuracy of a first output of a machine-learning model, wherein the machine-learning model is applied to a first portion of input data to generate the first output. The method comprises: using the machine-learning model to generate a second output, wherein the second output represents a prediction of a second, different portion of the input data; comparing the second output to the second portion of the input data to determine a prediction accuracy of the second output; and estimating the confidence value of an accuracy of the first output based on the prediction accuracy of the second output.

Thus, a same machine-learning model is used to generate a first output and a second output based on a first portion of input data. The first output represents a desired information analysis outcome of the input data, and the second output represents a prediction of a second, different portion of the input data. The second output is compared to the second, different portion to assess an accuracy of predicting the second portion. In this way, the second output acts as a verification of the accuracy of the machine-learning model.

If the second output does not accurately reflect the second portion of the input data, it can be assumed that the machine-learning model is inaccurate or in need of further training. In other words, by comparing a second output to the second portion of the input data, an accuracy of the machine-learning model (e.g. in predicting the first output) can be assessed. In particular, it has been recognized that if a second output (for which an actual value is known) generated using a machine-learning model is inaccurate, then a first output of that machine-learning model should also be inaccurate.

By estimating an accuracy of the machine-learning model, it can be determined whether the first output is reliable. This can lead to improved and more accurate automated analysis of input data.

Thus, the input data comprises a first portion of data (used to generate the first and second outputs) and a second portion of data (used to verify an accuracy of the second output, and thereby the overall machine-learning model). It should be noted that the second portion is not utilized in the generation of at least the second output, and is preferably not utilized in the generation of both the first and second outputs. In some embodiments, the second portion may be used to generate the first output.

Preferably, the step of comparing the second output to the second portion of the input data comprises determining an error between the second output and the second portion of the input data to thereby determine the prediction accuracy.

Determining an error between the second output and the second portion of the input data provides a quick and accurate method of determining a measure representative of an accuracy of predicting the second portion of the input data. Methods of determining such an error are known to persons skilled in the art, such as a sum-squared error.

It will be clear that the step of using the machine-learning model may comprise applying the machine-learning model to the first portion of input data to generate the second output.

The method may further comprise a step of modifying the machine-learning model based on the prediction accuracy of the second output and/or the confidence value of the first output. In this way, the machine-learning model may be updated if the second output does not accurately predict the second portion of the input data.

By way of example, the step of modifying may comprise retraining the machine-learning model or modifying the machine-learning model to improve the prediction accuracy. This provides a dynamic method of continually updating the machine-learning model to better reflect new input data.

In particular, additional training data for training the machine-learning model may be acquired and used to retrain the machine-learning model.

In one embodiment, to obtain such additional training data, the method may comprise receiving a user input (e.g. from an expert) indicating a correct/actual/true outcome to the desired information analysis outcome that the first output is attempting to predict. This correct outcome can then be associated with the input data to provide a new data entry for the additional training data.

Thus, in response to determining that the second output does not accurately predict the second portion of the input data, the method may comprise obtaining a user input indicating true value(s) for the first output (i.e. obtaining a "true first output") and associating the true first output with the input data to generate additional training data for training the machine-learning model. The method may, of course, further comprise retraining the machine-learning model based on the new training data.

In some examples, the user input may comprise an indication of whether the first output has correctly predicted the desired output. This may be indicative that the generation of the second output is inaccurate, and the machine-learning model needs updating. In this way, the true value(s) of the desired output data may be indicated, by the user, as being identical to the first output (i.e. the predicted value(s)) Such information may be used to refine the machine-learning model appropriately.

Alternatively, additional training data may be obtained from a database or dataset of existing training data. Such existing training data may exist, e.g. if new training data has become available such as from new studies, or if only a fraction of existing training data was used to initially train the machine-learning model (e.g. to minimize time spent generating the machine-learning model and/or minimize processing power).

In some examples, there is a method of generating a first output using a machine-learning model, where the method comprises: applying the machine-learning model to a first portion of input data to generate the first output; performing a method of estimating a confidence level of the first output using a method previously outlined and associating the estimated confidence level with the first output of the machine-learning model.

Thus, the machine-learning model may be adapted to provide the first output (e.g. to a user or further processing system) alongside an estimated confidence level of the first output. By associating the first output with a confidence level, there is a reduced likelihood that inaccurate information will be provided by using the machine-learning model.

The method may further comprise determining whether to reject the first output as inaccurate based on the estimated confidence level. An automated decision process may therefore reject or accept the first output based on an estimated confidence level of the accuracy of the first output. This prevents inaccurate/unreliable data or predictions from being provided (e.g. to a user or a further processing system).

The method may further comprise rejecting the first output as inaccurate in response to the estimated confidence level being less than a predetermined threshold value. This provides a simple and low-cost method of determining whether to reject or accept the first output of the machine-learning model.

The machine-learning model may comprise a deep learning machine model adapted to process a first portion of input data to generate at least the first output and the second output.

Preferably, the machine-learning model is an image analysis model.

In at least one embodiment, the first portion of the input data comprises a medical image, and the second portion of the input data comprises metadata associated with the medical image.

Such metadata can for example be general patient metadata like gender, age and weight/BMI, or more specialized medical data from the patient EMR like comorbidities, previous trauma, etc. The metadata may also be scan specific metadata, such as type or brand of scanner, scanner settings (e.g. beam intensity in CT) and operational data from the machine logs during scanning. Thus, the metadata associated with the medical image may comprise information on the imaged subject/patient or on the imaging system (e.g. type of imaging system or orientation).

In other embodiments, the first portion of the input data comprises of patient physiological measurements such as electroencephalography (EEG), electrocardiogram (ECG) or photoplethysmography (PPG) data, while the second portion of the input data comprises patient metadata (such as gender, age and weight or BMI) and/or sensor metadata (e.g. identifying the type of the sensor and/or the place of the attachment of the sensor).

In other embodiments, the first portion of the input data comprises of video/image recordings of a patient, and the second portion of the input data comprises patient metadata or video/imaging system metadata.

It is of particular importance in the medical industry for output information to be accurate. Thus, the proposed method is of particular benefit when used to assess an accuracy of an image analysis outcome (i.e. the first output) of a medical image. Moreover, medical images are commonly accompanied with suitable metadata (such as location/orientation of a scan or patient/subject information) which can be readily used to assess the accuracy of generating the second output.

Moreover, it has been recognized that training algorithms for processing medical images (e.g. to detect presence/absence of a tumor) often result in natural images lying close to the decision boundary. Thus, small perturbations in medical images may lead to large errors of prediction.

Some embodiments advantageously recognize that a same type of machine-learning model can be used on these same fickle natural images to predict something that can be checked during operational use of the machine learning model (i.e. the second output can be checked against the second portion of input data). The accuracy of the prediction of the second output can thereby be used as an indicator of a suspected accuracy of the prediction of a desired output (i.e. the first output).

According to examples in accordance with another aspect of the invention, there is provided a computer program comprising code means for implementing the any previously described method when said program is run on a computer.

According to examples in accordance with another aspect of the invention, there is provided a system for estimating a confidence level of an accuracy of a first output of a machine-learning model, wherein the machine-learning model is applied to a first portion of input data to generate the first output. The system comprises: a machine-learning model processor adapted to use the machine-learning model to generate a second output, wherein the second output represents a prediction of a second, different portion of the input data; a comparison unit adapted to compare the second output to the second portion of the input data to determine a prediction accuracy of the second output; and a confidence value estimator adapted to estimate the confidence value of an accuracy of the first output based on the prediction accuracy of the second output.

The comparison unit may be adapted to determine an error between the second output and the second portion of the input data to thereby determine the prediction accuracy.

The system may be adapted so that the machine-learning model processor is adapted to apply the machine-learning model to a first portion of input data to generate the first output, and so that the system further comprises a confidence level associator adapted to associate the estimated confidence level with the first output.

The system may further comprise an output rejection unit adapted to determine whether to reject the first output as inaccurate based on the estimated confidence level.

These and other aspects of the invention will be apparent from and elucidated with reference to the embodiment(s) described hereinafter.

BRIEF DESCRIPTION OF THE DRAWINGS

For a better understanding of the invention, and to show more clearly how it may be carried into effect, reference will now be made, by way of example only, to the accompanying drawings, in which:

Figure 1 illustrates a method according to an embodiment;
Figure 2 illustrates further steps for a method according to an embodiment; and
Figure 3 illustrates a system according to an embodiment.

DETAILED DESCRIPTION OF THE EMBODIMENTS

Embodiments of the invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

According to an embodiment of the invention, there is proposed a method and system for estimating a confidence of a machine-learning model output. The machine-learning model is applied to a first portion of input data to generate a first output (corresponding to a desired prediction task) and a second output (corresponding to second portion of the input data). The second output and the second portion of the input data are compared to determine a confidence value of the first output of the machine-learning model.

Embodiments are at least partly based on the realization that, as a machine-learning model can be used to predict multiple outputs, the machine-learning model may be arranged so that at least one of the multiple outputs corresponds to known data. This prediction of data (having already known values) can be exploited to determine a prediction accuracy of the machine-learning model, by comparing the predicted data to the known data. In this way, a confidence level of the accuracy of at least one other output (that does not correspond to known data) can be determined, as inaccurate prediction of outputs corresponding to known data is likely to accompany inaccurate prediction, using the same model, of other outputs that do not correspond to known data.

Illustrative embodiments may, for example, be employed in medical image analysis systems, such as those linked to Digital Pathology (IntelliSite) or CT scanners, for analyzing (medical) images to identify potential areas of concern, such a tumors. Moreover, such medical images are typically accompanied with known data (e.g. metadata). However, the concept can be more broadly applied to any machine-learning based model where knowledge of the reliability of the model output is important.

As used herein, the term "confidence level of an accuracy of a first output" refers to a measure of the confidence that the first output is accurate. Thus, the confidence level may indicate an estimated accuracy of the first output, e.g. as a percentage or fraction. The term "prediction accuracy" refers to a measure of accuracy of a prediction, and may include an error value indicative of an error between a predicted value and an actual value.

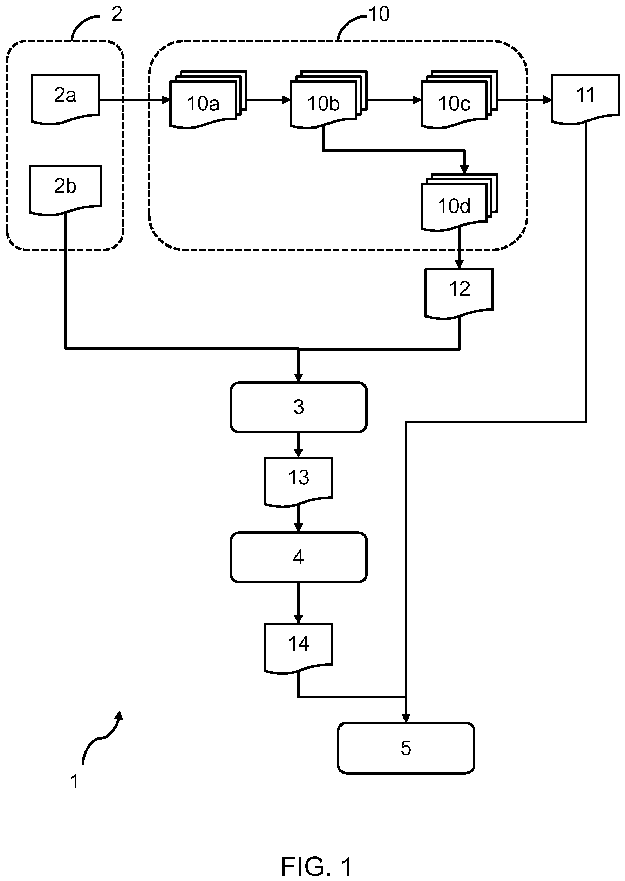

Figure 1 illustrates a method 1 according to an embodiment.

The method 1 aims to estimate a confidence level 14 of an accuracy of a first output 11 of a machine-learning model 10. The first output 11 is generated by applying the machine-learning model to input data 2, and in particular to a first portion 2a of input data 2.

The method 1 comprises using the machine-learning model 10 and the first portion 2a to generate a second output 12. The second output represents a prediction of a second portion 2b of the input data 2, different to the first portion 2a. In other words, the method 1 comprises processing the first portion 2a of the input data 2, using the machine-learning model 10, to generate a second output 12 corresponding to known data associated with the first portion 2a of the input data 2b (i.e. the second portion 2b).

The first portion 2a and second portion 2b of the input data correspond to one another, so that there is a relationship between the first and second portions. By way of example, the input data 2 may correspond to data obtained during capture of a medical image, where the first portion 2a corresponds to the medical image itself (e.g. pixel values) and the second portion 2b corresponds to metadata of the image, such as time of capture, orientation of image and so on.

The method 1 further comprises a step 3 of comparing the second output 12 to the second portion 2b of the input data 2 to determine a prediction accuracy 13 of the second output.

Put another way, the method 1 determines in step 3 how accurately the second output 12 represents the second portion 2b of the input data. In this way, the method 1 can determine how accurately the machine-learning model 10 has predicted the second portion 2b of the input data 2.

The method 1 also comprises a step 4 of estimating a confidence value 14 of an accuracy of the first output 11 based on the prediction accuracy of the second output.

In other words, the method 1 may predict a first 11 and second 12 output using a machine-learning model 10 applied to a first portion of input data 2. The second output 12 is associated with data having known values, i.e. the second portion 2b of the input data 2. In this way, an accuracy of the machine-learning model 10 (and thereby the accuracy/fidelity of the first output 11) can be ascertained by comparing the second output 12 to the known values of input data 2.

Thus, the machine-learning model 10 is trained to use a first portion 2a of input data 2 to predict a primary target (i.e. first output 11) and at least one secondary target (i.e. second output 12) corresponding to a second portion 2b of input data 2 associated with the first portion 2a.

Thus, the method may further comprise a step of applying the machine-learning model 10 to the first portion 2a of the input data 2 to generate the first output. In some examples, the method 1 may further comprise a step 5 of associating the estimated confidence level with the first output of the machine-learning model.

Step 3 of determining a prediction accuracy 13 may comprise determining an error value representative of an error between the second output 12 and the second portion 2b of the input data 2.

By way of example, the second output 12 may comprise a same number of values as the second portion 2b of the input data, and step 3 may comprise determining a mean squared error. Other options for determining a suitable error value or error measure are known to person skilled in the art and generally relate to sum-squared errors for prediction of numerical values, and/or numerical penalties for incorrect prediction(s) by the second output 12 of numerical values of the second portion 2b of the input data 2.

Accordingly, step 4 may comprise processing the error value obtained in step 3 to determine a confidence value 14 of an accuracy of the first output 11.

The error measure or error value 13 obtained in step 3 may be seen as inversely proportional to the confidence value 14. In other words, the greater an error value, the less confidence there is that the first output is accurate. Step 4 may therefore comprise performing a reciprocal function on the error value obtained in step 3.

For example, a confidence value C may be calculated in step 4 using the error value $E_{13}$, as set out in the following inverse exponential function:

$$C = \frac{e^{-A.E_{13}}}{B} \qquad (1)$$

where A and B are (positive) constants.

Thus, some emodiments of the proposed invention exploits situations where input data 2 comprises both a first set of information (first portion 2a), such as a radiology image, suitable for predicting a first output 11, such as presence/absence of a tumor, and a second set of information (second portion 2b) associated with the first portion 2a but not required for predicting the first output 11, such as metadata, medical/demographic information, location of scan etc.

The first portion 2a of the data is processed using a machine-learning model to predict both the first output 11 and a second output 12 (which represents a prediction of the second portion 2b of the input data). The second output 12 - i.e. the "predicted" second portion - and the "actual" second portion 2b are processed to determine a confidence level of the prediction of the first output 11.

As previously described, the input data 2 may comprise data about one or more medical images of a subject or patient. By way of example, the first portion 2a of the input data may comprise the one or more medical images and the second portion 2b may comprise metadata associated with the one or more medical images.

Thus, the second output 12 may be a prediction of metadata associated with the one or more medical images of the subject or patient.

In various embodiments the metadata or predicted metadata may include information about the subject (e.g., gender, age, and medical history), the imaging process/system (e.g. parameters of imaging capturing system, such as aperture, depth, length of exposure and so on) or other types of metadata (e.g. location where image captured, orientation of image).

Some embodiments of the invention may employ a deep learning model as the machine-learning model 10, as illustrated in Figure 1.

Deep learning is a specific form of machine-learning which typically makes use of large and complex neural networks ("deep neural networks"). These deep neural networks are able to start from very low-level input data, e.g. pixel values of an image. Here, the deep neural network comprises multiple layers 10a-10c, 10a-10d, where each respective layer interprets the foregoing layer. Each layer may produce a 'feature map', as is known in the art of deep learning.

The earlier layers 10a, 10b typically generate basic descriptive features of the input data. Thus, as the earlier or "deeper" levels 10a-10b of a deep neural network only perform basic tasks, i.e. are not necessary tuned to a specific desired output, such layers 10a, 10b may be re-used to perform data analysis tasks with other goals or desired outputs.

Thus, two different tasks (e.g. generation of two different outputs) may share the same deeper layers 10a, 10b, but be associated with different higher level layers 10c, 10d. These separate higher level layer 10c, 10d are therefore specific to each task. An advantage of such a setup is that twice as much data may be used to optimize the deeper layers, potentially resulting on a more effective or more reliable deeper feature extraction.

Thus, as illustrated, prediction of a first output 11 may use a first set of layers 10a, 10b and 10c, whereas prediction of the second output 12 may use a second set of layers 10a, 10b and 10d. The first and second set of layers may share one or more of the same layers (e.g. layers 10a, 10b), whilst comprising at least one respective unique layer 10c, 10d.

Methods of training, refining or 'optimizing' a machine-learning model will be well known to the person skilled in the art.

In the context of the present invention, such methods may comprise obtaining a machine-learning model (capable of predicting two desired outputs and optionally having random function parameters or weights) and collecting or obtaining training data for refining the machine-learning model. This training data includes a plurality of datasets, each dataset comprising example input data (containing a first portion for input to the machine-learning model and a second portion associated with the first portion), an example first output and an example second output (each representing known output data associated with the example input data).

For some embodiments of the present invention, as the example second output is intended to represent a prediction of the second portion of the example input data, the second portion of the example input data may be used as the example second output.

The machine-learning model is then applied to each dataset of the training data, in particular processing the first portion of each example input data to predict respective first outputs and second outputs. The predicted first output is then compared to the example first output and the predicted second output is compared to the example second output. The comparison may comprise calculating an error measure or error function between the predicted first output and the example first output and an error measure between the predicted second output and the example second output (e.g. appropriate errors measures are generated).

The error measures for each dataset may be averaged. Thus, a first and second average error measures may be generated (indicating average error in predicting the first output and the second output respectively).

The machine-learning model is then modified with the aim of reducing a difference between the predicted first and second outputs of each dataset of the training data and the model first and second outputs of each dataset of the training data. For example, the machine-learning model may be modified to reduce the first and second average errors measures.

Modifying the machine learning model may comprise using generally gradient descent based methods, sampling or other known methods of modifying a machine-learning model methods.

Modifying the machine-learning model may comprise modifying one or more of the layers. For example, where the machine-learning model is a deep learning model, base layers 10a-10b may be modified to improve an accuracy of predicting both the first output and the second output.

This process may be iteratively repeated to further reduce a difference between the predicted outputs and the example outputs for each dataset of the training data, to thereby improve a prediction capability of the machine-learning model.

Once the model is optimized or refined in this fashion, it can then be applied to new input data. The model will produce both a first output and a second output predicting the second portion of the new input data. The first output cannot be directly checked for accuracy (as this is the output that the model is intended to predict), but the second portion of the input data is available both in the optimization/training phase and in the application phase.

It is therefore possible to check the predicted second output against the recorded second portion of the input data, and calculate a prediction accuracy or error value. Preferably, the prediction accuracy may be calculated in a same manner as the error measure that is used in refining the (second output dependent part) of the machine leaning model, i.e. in a same manner as the calculated error measure between a predicted second output and the example second output.

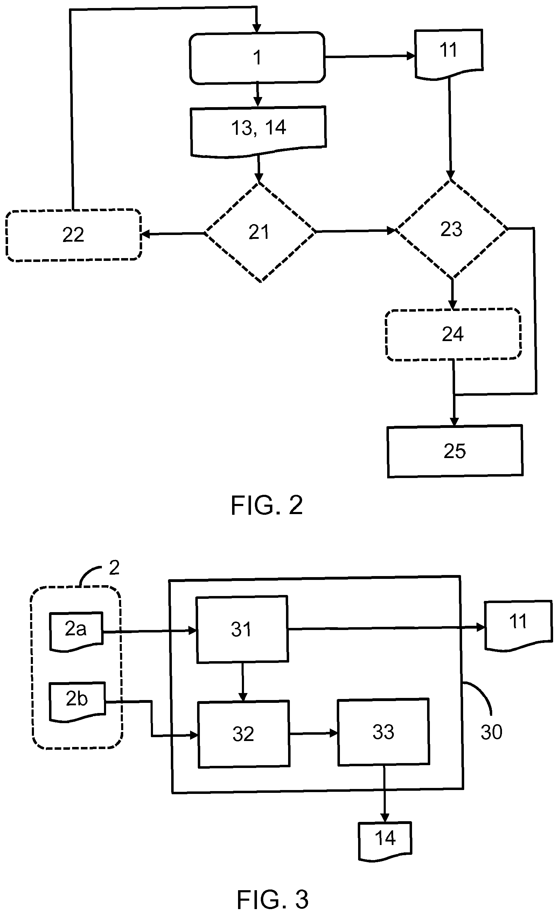

Figure 2 illustrates further steps to be taken with the confidence value 14 and/or the prediction accuracy 13.

According to one embodiment, the method further comprise a step 21 of determining whether to modify the machine-learning model (not shown) based on the prediction accuracy 13 and/or the confidence value 14.

For example, the prediction accuracy and/or the confidence value may be compared to a predetermined value to determine whether to modify the machine-learning model (e.g. if the prediction accuracy or confidence value indicates that the machine-learning model does not accurately predict the first/second output). By way of example, where the confidence value is a percentage, step 21 may comprise determining whether the confidence value is below a predetermined threshold percentage. In response the confidence value being below the predetermined threshold value, the method may comprise determining to modify the machine-learning model.

The method may further comprise a corresponding step 22 of modifying the machine-learning model. The modifying of the machine-learning model may be based on the confidence value and/or the prediction accuracy. For example, step 22 may comprise modifying the machine-learning model to improve a confidence value. Step 22 may comprise refining the machine-learning model using training data (e.g. where known values for the first output are provided), such as using any training/refining method previously described.

For example, step 22 may comprise obtaining additional training data for further training the machine-learning model. This may comprise receiving a user input (e.g. from an user/expert) indicating a correct/actual/true answer to an outcome that the first output is attempting to predict. This correct answer (i.e. true first output) can then be associated with the input data to provide a new data entry for the additional training data. In other words, a user input may define a new data entry for training data by defining example output data to be associated with input data - which then subsequently acts as example input data).

When the machine-learning model has been modified, method 1 may be repeated to re-generate the first/second outputs, together with the prediction accuracy 13 and the confidence value 14.

Such a modification step may thereby employ an incremental learning methodology.

In some embodiments, the method comprises a step 23 of determining whether to reject the first output 11 as inaccurate based on the estimated confidence level. For example, step 23 may comprise determining whether the estimated confidence level is less than a predetermined threshold value. In response to the estimated confidence level being less than the predetermined threshold value, the first output may be rejected, otherwise, the first output may be accepted as accurate.

Accordingly, the method may comprise a step 24 of rejecting the first output as inaccurate. This may comprise, for example, generating an alert or flag indicating that the first output is inaccurate or not passing the prediction of the first output to a further processing system. This avoids inaccurate information being passed, e.g. to a clinician or further processing system.

In step 25, the method may end. Thus, step 24 of rejecting the first output as inaccurate may be skipped if it is determined not to reject the first output 11 as inaccurate in step 23.

The steps 21 and 23 may be combined into a single step. That is, there may be single step of simultaneously determining whether to modify the machine-learning model and reject the first output as inaccurate. In other words, in response to a determination to modify the machine-learning model, the method may comprise rejecting the first output as inaccurate or vice versa.

Previous embodiments have generally been described in the context of machine learning models for processing an image (e.g. to detect presence of tumors). That is, in previously described embodiments, the input data is image data (e.g. of which a first portion is an image and a second portion is image metadata), where the first output is an indication of tumor presence and a second output is predicted image metadata. However, other embodiments may use different information as input data and/or output(s).

Table 1 illustrates some such embodiments. Table 1 omits the identification of the relevant second outputs - as these are simply predictions of the relevant second portion of input data.

Table 1

| First Portion of Input Data | Second Portion of Input Data | First Output |
|---|---|---|
| CT Image | Image Metadata, CT System Characteristics, Patient Demographic Information (e.g. age, gender) and/or Patient History | Presence of Tumor, Malignity of Nodules and/or Calcification Presence |
| Digital Pathology Image | Image Metadata, Pathology Characteristics (e.g. intensity of used stain) and/or Patient History | Tumor Grade and/or Cancer Prognosis |
| ECG Trace | Type/Location of Sensor and/or Patient Information | Presence of Heart Condition |
| Electroencephalography (EEG) | Type/Location of Sensor and/or Patient Information | Presence of Brain Condition |
| Photoplethysmography (PPG) | Type/Location of Sensor, Skin Color, Activity State, Type of Use and/or Patient Information | Heart rate, heart rate variability, SpO2 reading, atrial fibrillation event presence, relative blood pressure |
| Video/Image Recoding of Patient | Image Metadata, CT System Characteristics, Patient Demographic Information (e.g. age, gender) and/or Patient History | Presence of Delirium |

Figure 3 illustrates a system 30 for estimating a confidence level 14 of an accuracy of a first output 11 of a machine-learning model (not shown), according to an embodiment of the invention. As before, the machine-learning model is applied to a first portion of input data to generate the first output.

The system 30 comprises a machine-learning model processor 31, a comparison unit 32 and a confidence value estimator 33.

The machine-learning processor 31 is adapted to use the machine-learning model to generate a second output, wherein the second output represents a prediction of a second, different portion of the input data. The machine-learning processor 31 may also use the machine-learning model to generate the first output 11.

The comparison unit 32 is adapted to compare the second output to the second portion of the input data to determine a prediction accuracy of the second output. For example, the comparison unit may be adapted to determine an error between the second output and the second portion of the input data to thereby determine the prediction accuracy.

The confidence value estimator 33 is adapted to estimate the confidence value 14 of an accuracy of the first output based on the prediction accuracy of the second output.

Optionally, the system 30 may further comprise a confidence level associator (not shown) adapted to associate the estimated confidence level with the first output. The system may further comprise an output rejection unit (not shown) adapted to determine whether to reject the first output as inaccurate based on the estimated confidence level.

Some embodiments of the present invention may be a system, a method, and/or a computer program product. The computer program product may include a computer readable storage medium (or media) having computer readable program instructions thereon for causing a processor to carry out aspects of the present invention. The computer readable storage medium can therefore be a tangible device that can retain and store instructions for use by an instruction execution device, such as a controller, processor or processing system, for executing a method according to the present invention.

Embodiments of the present invention is described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer readable program instructions.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s).

In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

**Claims**

1. A method (1) of estimating a confidence level (14) of an accuracy of a first output (11) of a machine-learning model (10), wherein the machine-learning model is applied to a first portion (2a) of input data (2) to generate the first output, the method comprising:

   using the machine-learning model to generate a second output (12), wherein the second output represents a prediction of a second, different portion (2b) of the input data (2);
   comparing (3) the second output (12) to the second portion (2b) of the input data (2) to determine a prediction accuracy (13) of the second output; and
   estimating (4) the confidence value (14) of an accuracy of the first output (11) based on the prediction accuracy (13) of the second output.

2. The method of claim 1, wherein the step (3) of comparing the second output (12) to the second portion (2b) of the input data (2) comprises determining an error between the second output and the second portion of the input data to thereby determine the prediction accuracy.

3. The method of any of claims 1 or 2, wherein the step of using the machine-learning model comprises applying the machine-learning model to the first portion of input data to generate the second output.

4. The method of any of claims 1 to 3, further comprising a step (22) of modifying the machine-learning model based on the prediction accuracy (13) of the second output and/or the confidence value (14) of the first output.

5. A method of generating a first output (11) using a machine-learning model (10), the method comprises:

   applying the machine-learning model (10) to a first portion (2a) of input data (2) to generate the first output (11);
   performing a method (1) of estimating a confidence level of the first output using a method according to any of claims 1 to 4; and
   associating (5) the estimated confidence level with the first output of the machine-learning model.

6. The method of claim 5, further comprising determining (23) whether to reject the first output as inaccurate based on the estimated confidence level (14).

7. The method of claim 6, further comprising rejecting (24) the first output (11) as inaccurate in response to the estimated confidence level (14) being less than a predetermined threshold value.

8. The method of any of claims 1 to 7, wherein the machine-learning model (10) comprises a deep learning machine model adapted to process a first portion (2a) of input data (2) to generate at least the first output and the second output.

9. The method of any of claims 1 to 8, wherein the machine-learning model (10) is an image analysis model.

10. The method of claim 9, wherein the first portion (2a) of the input data (2) comprises a medical image, and the second portion (2b) of the input data (2) comprises metadata associated with the medical image.

11. A computer program comprising code means for implementing the method of any one of claims 1 to 10 when said program is run on a computer.

12. A system (30) for estimating a confidence level (14) of an accuracy of a first output (11) of a machine-learning model, wherein the machine-learning model is applied to a first portion (2a) of input data (2) to generate the first output, the system comprising:

a machine-learning model processor (31) adapted to use the machine-learning model to generate a second output, wherein the second output represents a prediction of a second, different portion of the input data; a comparison unit (32) adapted to compare the second output to the second portion of the input data to determine a prediction accuracy of the second output; and a confidence value estimator (33) adapted to estimate the confidence value (14) of an accuracy of the first output based on the prediction accuracy of the second output.

13. The system (30) of claim 12, wherein the comparison unit (32) is adapted to determine an error between the second output and the second portion of the input data to thereby determine the prediction accuracy.

14. The system (30) according to any of claims 12 or 13 wherein:

the machine-learning model processor (31) is adapted to apply the machine-learning model to a first portion of input data to generate the first output, and wherein the system further comprises a confidence level associator adapted to associate the estimated confidence level with the first output.

15. The system (30) of claim 14, further comprising an output rejection unit adapted to determine whether to reject the first output as inaccurate based on the estimated confidence level.

FIG. 1

FIG. 2

FIG. 3

Europäisches
Patentamt

European
Patent Office

Office européen
des brevets

**EUROPEAN SEARCH REPORT**

Application Number

EP 18 18 9763

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 273 387 A1 (SIEMENS HEALTHCARE GMBH [DE]) 24 January 2018 (2018-01-24) <br> * paragraph [0001] - paragraph [0005] * <br> * paragraph [0042] - paragraph [0062]; figures 1-6 * <br> * paragraph [0021] - paragraph [0032] * <br> ----- | 1-15 | INV. <br> G06N3/04 <br> G06N3/08 |
| A | Terrance Devries ET AL: "Learning Confidence for Out-of-Distribution Detection in Neural Networks", <br><br> 13 February 2018 (2018-02-13), XP055551171, <br> Retrieved from the Internet: <br> URL:https://arxiv.org/pdf/1802.04865.pdf <br> [retrieved on 2019-02-04] <br> * the whole document * <br> ----- | 1-15 | |
| A | Terrance Devries ET AL: "Leveraging Uncertainty Estimates for Predicting Segmentation Quality", <br><br> 2 July 2018 (2018-07-02), XP055551170, <br> Retrieved from the Internet: <br> URL:https://arxiv.org/pdf/1807.00502.pdf <br> [retrieved on 2019-02-04] <br> * the whole document * <br> ----- | 1-15 | TECHNICAL FIELDS SEARCHED (IPC) <br><br> G06N |

The present search report has been drawn up for all claims

| Place of search | Date of completion of the search | Examiner |
|---|---|---|
| The Hague | 7 February 2019 | Moro Pérez, Gonzalo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 18 9763

This annex lists the patent family members relating to the patent documents cited in the above-mentioned European search report.
The members are as contained in the European Patent Office EDP file on
The European Patent Office is in no way liable for these particulars which are merely given for the purpose of information.

07-02-2019

| Patent document cited in search report | | Publication date | Patent family member(s) | | Publication date |
|---|---|---|---|---|---|
| EP 3273387 | A1 | 24-01-2018 | EP | 3273387 A1 | 24-01-2018 |
| | | | WO | 2018015080 A1 | 25-01-2018 |

EPO FORM P0459

For more details about this annex : see Official Journal of the European Patent Office, No. 12/82